(19) Europäisches Patentamt
European Patent Office
Office européen des brevets

(11) **EP 2 901 627 B1**

(12) **FASCICULE DE BREVET EUROPEEN**

(45) Date de publication et mention de la délivrance du brevet:
**26.04.2017 Bulletin 2017/17**

(21) Numéro de dépôt: **13779310.5**

(22) Date de dépôt: **26.09.2013**

(51) Int Cl.:
*H04L 12/40* $^{(2006.01)}$     *H04W 74/00* $^{(2009.01)}$

(86) Numéro de dépôt international:
**PCT/FR2013/052265**

(87) Numéro de publication internationale:
**WO 2014/049272 (03.04.2014 Gazette 2014/14)**

(54) **PROCEDE ET DISPOSITIF DE REGULATION D'EMISSION DANS UN RESEAU DE TELECOMMUNICATION**

VERFAHREN UND VORRICHTUNG ZUM REGELN EINER ÜBERTRAGUNG IN EINEM TELEKOMMUNIKATIONSNETZ

METHOD AND DEVICE FOR REGULATING TRANSMISSION IN A TELECOMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2012 FR 1259229**

(43) Date de publication de la demande:
**05.08.2015 Bulletin 2015/32**

(73) Titulaire: **Orange
75015 Paris (FR)**

(72) Inventeurs:
• **GALTIER, Jérôme
F-06000 Nice (FR)**
• **BROWN, Patrick
F-06800 Cagnes Sur Mer (FR)**

(56) Documents cités:
**WO-A1-2005/020518     US-A1- 2007 002 734
US-A1- 2010 322 220**

• **ZAKHIA G ABICHAR AND J MORRIS CHANG: "CONTI: Constant-Time Contention Resolution for WLAN Access", INTERNET CITATION, 6 mai 2005 (2005-05-06), XP002392550, Extrait de l'Internet:
URL:http://www.springerlink.com/media/dlte umlulp4y0qqunm13/contributions/l/p/0/d/lp0 df7lkxhc1t688.pdf [extrait le 2006-07-28]**

**Description**

La présente invention concerne le domaine des réseaux de télécommunication. Elle trouve une application intéressante dans les réseaux de télécommunications sans fil, en particulier des réseaux locaux sans fil ou WLAN (de l'anglais "Wireless Local Access Network") conformes à la famille de normes IEEE 802.11 ou plus généralement aux réseaux de type CSMA/CA (Carrier Sense Multiple Access with Collision Avoidance).

Les réseaux conformes aux normes IEEE 802.11 sont également nommés réseaux Wi-Fi. Ils sont utilisés pour mettre en réseau, dans de nombreuses applications, des stations (par exemple des ordinateurs, des assistants personnels et des périphériques).

La norme 802.11 définit dans le document "IEEE 802.11 a-1999, IEEE 802.11 b-1999, IEEE-802.11 d-2001, Part 11 : wireless LAN medium access control (MAC) and physical layer (PHY) spécifications" un procédé de régulation du trafic dans le réseau sans fil. Ce procédé utilise un système de fenêtres de congestion (Congestion Window "CW") pour réguler ce trafic. Selon cette norme, pour déterminer l'instant où émettre un paquet de données, une station tire un nombre aléatoire au hasard entre 0 et CW-1, la valeur CW étant un entier compris entre deux valeurs $CW_{min}$ et $CW_{max}$ spécifiées par la norme 802.11.

Cette valeur CW sert de compteur à rebours pour l'émission du paquet, ce compteur étant différé si la station constate qu'une autre station est en train d'émettre. Malheureusement, ce système à fenêtres de congestion génère un nombre important de collisions sur le réseau sans fil, ce qui se traduit, du point de vue de l'utilisateur, par une perte importante de bande passante.

Un autre mécanisme connu sous le nom de "méthode des tournois" est susceptible d'être utilisé par les différentes stations pour réguler les émissions de paquets et limiter le taux de collision. Cette méthode des tournois est décrite dans le document des auteurs Z. Abichar et M. Chang, intitulé " CONTI: Constant Time Contention Resolution for WLAN Access", IFIP Networking 2005.

La méthode des tournois consiste à organiser une sorte de tournoi entre les stations ayant à émettre un paquet. Un tournoi est composé d'un certain nombre de tours de sélection, exécuté chacun pendant un intervalle de temps de durée prédéfinie permettant à chaque station d'avoir le temps d'entendre l'émission de toute autre. Cette durée peut typiquement être égale à la durée de l'intervalle de temps nommé "SlotTime" qui, selon le standard IEEE 802.11, est définie comme intervalle élémentaire dans la procédure de résolution de contention par fenêtre de congestion.

Au début du tournoi, toutes les stations ayant à émettre un paquet sont susceptibles d'être autorisées à émettre ce paquet. A chaque tour de sélection, une ou plusieurs stations sont susceptibles d'être supprimées de la liste des stations autorisées à émettre, selon qu'une autorisation ou une interdiction d'émettre leur est attribuée lors de ce tour de sélection. A l'issue du tournoi, seules les stations non éliminées sont autorisées à émettre. Si plusieurs stations restent en lice à l'issue du tournoi, elles émettent en même temps provoquant ainsi une collision et donc une réception perturbée avec impossibilité de recevoir correctement les paquets de données émis. Ces stations devront alors participer au tournoi suivant pour tenter d'émettre à nouveau ces paquets.

Dans le cas de l'émission de flux de données requérant un accès prioritaire au réseau ou une bande passante élevée, il apparaît le besoin de fournir une solution de régulation d'émission permettent de garantir un niveau de performance en termes de bande passante ou de débit ainsi qu'une qualité de service.

Le document brevet WO2009/095628 (publié aussi sous le n° US 2010/0322220 A1) décrit une solution, utilisant la méthode des tournois et permettant, lorsqu'on est en présence de stations ayant des flux de différents niveaux de priorité à émettre, un partage équitable de l'accès au médium radio entre les différentes stations.

Dans cette solution, les valeurs représentatives d'une autorisation ou interdiction d'émettre, affectées à une station pour les tours de sélection d'un tournoi courant sont déduites d'une valeur d'index, affectée à la station pour le tournoi courant et calculée à partir d'une valeur d'index affectée à la station pour un tournoi antérieur.

Le document WO2009/095628 décrit plus précisément une méthode d'ordonnancement de type Round Robin, conçue pour être mise en oeuvre entre des stations ayant à émettre des paquets et appartenant à une même classe de paquets. Par écoute des signaux émis pendant les tours de sélection d'un tournoi, une station peut déterminer la suite des valeurs représentant les autorisations ou interdictions obtenues au cours des différents tours de sélection par la station gagnant le tournoi. Cette suite de valeurs permet à la station de déterminer, à partir de la valeur d'index A utilisée par cette station pour la détermination des valeurs représentant les autorisations ou interdictions qui lui sont allouées au cours du tournoi courant, une valeur d'index A', à utiliser pour la détermination des valeurs représentant les autorisations ou interdictions des différents tours de sélection à utiliser pour le tournoi suivant.

La valeur A' est notamment calculée à partir de la valeur A, par une opération de permutation circulaire de longueur $A^i$ sur la valeur de A dans l'intervalle [0 ; 1 [, qui est définie comme suit:

$$A'=A+1-A^i \text{ si } A< A^i$$

$$A'=A-A^i \text{ si } A \geq A^i$$

où $[A^{i-1}, A^i[$ est l'intervalle de valeur dans lequel se trouve la valeur d'index $A_{win}$ utilisée par la station ayant gagné le tournoi courant, avec i=1 à Z (Z étant nombre entier positif), Pour rappel, comme décrit dans la demande de brevet WO 2009 / 095628, les Z intervalles $[A^0, A^1[,... [A^i, A^{i+1}[,... [A^{Z-1}, A^Z[$ forment une partition de l'intervalle $[0 ;1[$ avec $A^0 =0$ et $A^Z =1$.

La solution décrite dans la demande de brevet WO 2009 / 095628 ne fonctionne pas de manière optimale lorsque les signaux émis par les stations pendant les tours de sélection sont brouillés, en raison par exemple de problème de propagation liés à des obstacles ou de mauvaises conditions radio.

En conséquence, la valeur de $A^i$ ne peut pas être déterminée correctement par toutes les stations mettant en oeuvre la méthode de Round Robin et la permutation circulaire effectuée sur la valeur d'index A par une station ne sera pas identique à la permutation circulaire effectuée par les autres stations. La performance du Round Robin en est affectée en ce que l'équité d'accès au médium radio n'est plus garantie. En particulier, le nombre de collisions entre stations peut donc augmenter significativement, entraînant une dégradation des transmissions.

Un des buts de l'invention est de remédier à des insuffisances et inconvénients de l'état de la technique et/ou d'y apporter des améliorations.

Plus précisément, l'invention concerne, selon un premier aspect, un premier procédé de régulation d'émission mis en oeuvre par une station, ayant au moins un paquet à émettre *via* un réseau de communication, participant à au moins un tournoi composé d'une succession de tours de sélection, le procédé comprenant,

- une étape d'obtention par ladite station, pour chaque tour de sélection d'un premier tournoi, d'une valeur binaire affectée à ladite station, représentative soit une autorisation d'émettre, soit d'une interdiction d'émettre,
- une étape d'émission, à l'issue du premier tournoi, d'au moins un paquet par ladite station lorsque ladite station détermine, en fonction d'au moins une des valeurs binaires affectées à ladite station pour lesdits tours de sélection du premier tournoi, que ladite station est autorisée à émettre,

ledit au moins un paquet émis par ladite station comprenant des données représentatives de la succession des valeurs binaires, affectées à ladite station pour lesdits tours de sélection.

Ce procédé de régulation selon le deuxième aspect est mis en oeuvre par une station ayant gagné le tournoi. La transmission de données sur la succession des valeurs binaires affectées à la station gagnante permet d'informer les autres stations sur cette succession de valeurs binaires et donc d'aboutir à une estimation correcte du paramètre $A^i$ servant pour la détermination de la valeur d'index à utiliser pour le prochain tournoi. Les autres stations reçoivent en effet cette information en complément des signaux reçus pendant le tournoi, ce qui permet de fiabiliser et d'uniformiser le comportement des différentes stations.

Les données représentatives de la succession des valeurs binaires peuvent être choisies de différentes manières.

Dans une première variante, lesdites données comprennent ladite succession des valeurs binaires affectées à ladite station pour lesdits tours de sélection.

Dans une deuxième variante, lesdites données comprennent une valeur d'index à partir de laquelle ladite succession de valeurs binaires a été déterminé.

Dans une troisième variante, lesdites données comprennent une valeur représentant la longueur d'une permutation circulaire destinée à être appliquée à une valeur d'index affectée à une station participant audit premier tournoi pour déterminer, pour chaque tour de sélection d'un deuxième tournoi postérieur au premier tournoi, d'une valeur binaire affectée à ladite station, représentative soit une autorisation d'émettre, soit d'une interdiction d'émettre.

L'invention concerne, selon un deuxième aspect, un deuxième procédé de régulation d'émission mis en oeuvre par une station, ayant au moins un paquet à émettre *via* un réseau de communication sans fil, participant à au moins un tournoi composé d'une succession de tours de sélection, le procédé comprenant,

- une étape d'obtention par ladite station, pour chaque tour de sélection d'un premier tournoi, d'une valeur binaire affectée à ladite station, représentative soit une autorisation d'émettre, soit d'une interdiction d'émettre,
- une étape d'écoute d'une émission d'au moins paquet émis par une autre station qui est autorisée à émettre à l'issue du premier tournoi,

ledit au moins un paquet émis par ladite autre station comprenant des données représentatives de la succession des valeurs binaires, affectées à ladite autre station pour lesdits tours de sélection.

Ce procédé de régulation selon le deuxième aspect est mis en oeuvre par une station n'ayant pas gagné le tournoi. La réception de données représentatives de la succession des valeurs binaires affectées à la station gagnante permet d'aboutir à une estimation correcte du paramètre $A^i$ servant pour la détermination de la valeur d'index à utiliser pour le prochain tournoi.

Selon un premier mode de réalisation, ce deuxième procédé comprend une étape de mise en oeuvre par ladite station d'un deuxième tournoi postérieur au premier tournoi, comprenant une étape de détermination, pour chaque tour de sélection dudit deuxième tournoi, d'une valeur binaire affectée à ladite station, représentative soit une autorisation d'émettre, soit d'une interdiction d'émettre, à partir des données représentatives de la succession des valeurs binaires, affectées à ladite autre station. Les données transmises avec le paquet, reçues par une station sont utilisables directement pour déterminer les autorisations et/ou interdictions d'émettre dont bénéficie cette station pour le prochain tournoi.

Selon un deuxième mode de réalisation, ce deuxième procédé comprend une étape de mise en oeuvre par ladite station d'un deuxième tournoi postérieur au premier tournoi, comprenant une étape de détermination, pour chaque tour de sélection dudit deuxième tournoi, d'une valeur binaire affectée à ladite station, représentative soit une autorisation d'émettre, soit d'une interdiction d'émettre, à partir de données représentatives d'une succession prédéterminée de valeurs binaires représentatives d'une autorisation ou interdiction d'émettre. Des données prédéfinies, pouvant simplement être stockées en mémoire dans une phase de configuration, sont utilisables directement pour déterminer les autorisations et/ou interdictions d'émettre dont bénéficie cette station pour le prochain tournoi.

Selon une variante de réalisation compatible avec l'un quelconque des modes de réalisation précités, une dite valeur binaire affectée à ladite station pour un tour de sélection du premier tournoi est obtenue à partir d'une valeur d'index A(p) représentative du comportement de ladite station pendant le premier tournoi, dans lequel une dite valeur binaire affectée à ladite station pour un tour de sélection du deuxième tournoi est obtenue à partir d'une valeur d'index A(p+1) représentative du comportement de ladite station pendant le deuxième tournoi, le deuxième procédé comprenant en outre une étape de détermination de la valeur d'index A(p+1) à partir de la valeur d'index A(p) et de données représentatives d'une succession de valeurs binaires représentatives d'une autorisation ou interdiction d'émettre.

Ces données sont soit les données transmises avec le paquet précitées, soit des données prédéfinies précitées, communes à toutes les stations, qui sont représentatives d'une succession prédéterminée de valeurs binaires représentatives d'une autorisation ou interdiction d'émettre. Le procédé de régulation est ainsi compatible avec la mise en oeuvre de méthodes d'ordonnancement entre stations, du type Round Robin décrites dans la demande de brevet WO 2009 / 095628. L'invention vient fiabiliser la mise en oeuvre de ces méthodes d'ordonnancement, grâce auxquelles les différentes stations bénéficieront d'un accès équitable au médium de transmission.

En particulier, ladite valeur d'index A(p+1) est obtenue comme suit:

$$A(p+1) = A(p)+1 - A_n^i \ \text{si} \ A(p) < A_n^i$$

$$A(p+1) = A(p) - A_n^i \ \text{si} \ A(p) \geq A_n^i$$

où $A_n^i$ est une valeur obtenue à partir des données représentatives d'une succession de valeurs binaires représentatives d'une autorisation ou interdiction d'émettre.

Cette détermination de la valeur d'index affectée à une station permet une mise en oeuvre simple des méthodes d'ordonnancement entre stations.

Corrélativement, l'invention a pour objet un dispositif de régulation d'émission d'une station, ayant au moins un paquet de données à émettre via un réseau de communication, participant à au moins un tournoi composé d'une succession de tours de sélection, le dispositif comprenant

- des moyens d'obtention par ladite station, pour chaque tour de sélection d'un premier tournoi, d'une valeur binaire affectée à ladite station, représentative soit une autorisation d'émettre, soit d'une interdiction d'émettre,
- des moyens d'émission, à l'issue du premier tournoi, d'au moins paquet par ladite station lorsque ladite station détermine, en fonction d'au moins une des valeurs binaires affectées à ladite station pour lesdits tours de sélection du premier tournoi, que ladite station est autorisée à émettre,

ledit au moins un paquet émis par ladite station comprenant des données représentatives de la succession des valeurs binaires, affectées à ladite station pour lesdits tours de sélection.

Les avantages énoncés pour le procédé selon l'invention sont transposables directement au dispositif selon l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'une station d'émission de paquet et conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel ou qu'à un composant matériel. Un composant logiciel correspond à un ou plusieurs programmes d'ordinateur, un ou plusieurs sous-programmes d'un programme, ou de manière plus générale à tout élément d'un programme conçu pour mettre en oeuvre une fonction ou un ensemble de fonctions. Un composant matériel correspond à tout élément d'un ensemble matériel (ou hardware) conçu pour mettre en oeuvre une fonction ou un ensemble de fonctions.

D'autres buts, caractéristiques et avantages de l'invention apparaîtront à travers la description qui va suivre, donnée uniquement à titre d'exemple non limitatif, et faite par référence aux dessins annexés dans lesquels:

- la figure 1 représente un réseau de télécommunication sans fil avec des stations conformes à l'invention dans un mode préféré de réalisation ;
- la figure 2 représente un dispositif de régulation d'émission conforme à l'invention dans un mode préféré de réalisation ;
- la figure 3 représente, sous forme d'organigramme, les principales étapes d'un procédé de régulation d'émission selon l'invention.

Le procédé et le dispositif selon l'invention sont maintenant décrits plus en détail. Comme déjà évoqué en introduction de la présente demande, l'invention fait appel à la notion de classe de paquets. La notion de classe de paquets utilisée dans ce document est à interpréter au sens large.

A titre d'exemple, la norme IEEE 802.11 définit huit classes de paquet nommées respectivement "Control" (paquets de contrôle), "Voice" (paquets appartenant à un flux transmettant de la voix), "Audio" (paquets appartenant à un flux audio), "Class 1", "Class 2", "Class 3", "Class 4" et "Best Effort". Une classe de cette norme correspond à une catégorie de flux ayant des besoins spécifiques en termes de qualité de service: une bande passante minimale, un taux d'erreur de transmission faible, etc.

D'autres manières de définir des classes de paquet sont également envisageables. Ces classes peuvent notamment être définies en fonction de tout paramètre caractéristique du paquet ou du flux auquel appartient ce paquet: par exemple en fonction de la taille du paquet, en fonction du niveau de priorité du paquet, en fonction de la durée du flux de communication auquel appartient le paquet, en fonction de la provenance ou de la destination du paquet, etc.

L'invention est applicable à tout système de classification de paquet, pourvu que la classe d'appartenance d'un paquet puisse être déterminée ou obtenue d'une manière ou d'une autre par la station ayant ce paquet à émettre. L'invention permet de traiter de manière différenciée les différentes classes définies, en garantissant pour chacune de ces classes une qualité de service en termes de bande passante et d'équité de traitement.

On suppose ici que la classe n affectée à un paquet est codée par une valeur entière comprise dans un intervalle de valeurs $[N_{min}, N_{max}]$, par exemple [1, 8].

Le procédé de régulation d'émission va maintenant être décrit dans le cas de son application à un réseau de télécommunication radio. Elle est néanmoins applicable plus généralement à tous les réseaux de type CSMA/CA (Carrier Sense Multiple Access with Collision Avoidance) dans lesquels l'accès au médium de transmission doit être contrôlé pour éviter que deux stations émettrices émettent simultanément, c'est-à-dire éviter les collisions.

Dans la suite de la description les notations suivantes seront utilisées:

- k est l'indice identifiant le tour de sélection au cours d'un tournoi;
- $k_{max}$ est le nombre maximal de tours de sélection pour un tournoi;
- r est une variable aléatoire binaire;
- r(k) est la valeur de la variable aléatoire binaire r tirée au tour de sélection d'indice k; r(k) appartient à l'ensemble {0,1}, la valeur "1" étant représentative usuellement d'une autorisation d'émettre, tandis que la valeur "0" est représentative d'une interdiction d'émettre.

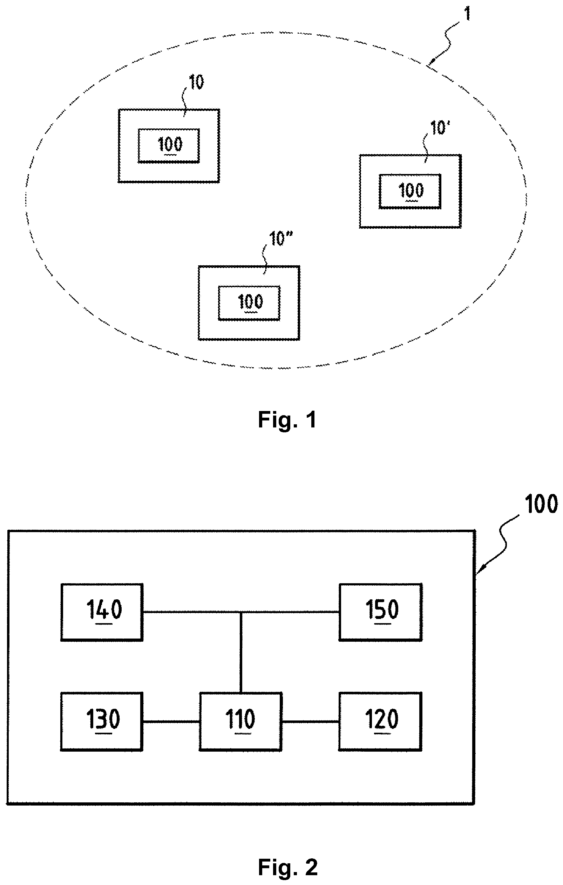

La **figure 1** représente un réseau 1 de télécommunication sans fil dans lequel évoluent des stations 10, 10', 10" conformes à l'invention. Chacune de ces stations 10 comporte un dispositif 100 de régulation d'émission conforme à l'invention.

Dans le mode illustré à la **figure 2**, le dispositif 100 selon l'invention comporte un processeur 110, une mémoire vive 120, une mémoire morte de type ROM 130, un module 140 d'accès au réseau 1, pour émettre et recevoir des paquets et des signaux dans le réseau de télécommunication sans fil 1 et une table de valeurs de probabilités 150, contenant les valeurs représentatives des interdictions ou autorisations obtenues par une station pour les différentes tours de sélection d'un tournoi. Ces différents éléments sont reliés entre eux par un système de bus de données non référencé. Les moyens 140 pour envoyer et recevoir des paquets de données et des signaux sur le réseau de télécommunication sans fil 1 sont, dans l'exemple décrit ici, constitués par une carte d'accès au réseau 1 conforme à la famille de normes IEEE 802.11.

Les stations 10, 10', 10" comportent en outre chacune un module de régulation d'émission, qui met en oeuvre le procédé de régulation d'émission qui sera décrit ci-dessous.

Pour la mise en oeuvre de l'invention, il est fait usage de la méthode des tournois citée en introduction. Dans la méthode des tournois, telle que décrite par CONTI dans le document référencé ci-dessus, les autorisations ou interdictions d'émettre sont attribuées aux stations en utilisant des variables aléatoires binaires ayant une loi de distribution de Bernoulli. Cette loi de distribution est définie par une probabilité de tirage d'une autorisation d'émettre. Une telle probabilité r est ainsi affectée à chaque station et à chaque tour de sélection k.

Le procédé décrit ici diverge de la solution CONTI connue notamment en ce que pour une station 10, à chaque tournoi, une valeur d'index, représentative du comportement de la station au cours du tournoi, est utilisée pour calculer les valeurs binaires r(k) à utiliser au cours de ce premier tournoi pour les différents tours de sélection k, avec $1 \leq k \leq k_{max}$. Ces valeurs binaires r(1) à r(k) sont stockées en mémoire par la station et utilisées au fur et à mesure des tours de sélection 1 à $k_{max}$.

La détermination de ces valeurs binaires r(k) prend en compte la classe n à laquelle appartient le ou les paquets à émettre par la station. Cette prise en compte de la classe n est effectuée de la manière suivante.

Pour chaque classe n de paquets, une suite de Z sous-intervalles $[A_n^{i-1}, A_n^i[$ réalisant une partition de l'intervalle $[0 ; 1[$ est définie. Elle détermine la probabilité qu'une station de cette classe de paquet accède au réseau.

Une station, ayant un paquet de classe n à émettre, obtient la suite des Z sous-intervalles $[A_n^{i-1}, A_n^i[$ associée à la classe n. La station identifie ensuite dans quel sous-intervalle $[A_n^{i-1}, A_n^i[$ se trouve la valeur d'index obtenue pour le tournoi courant: les valeurs binaires r(1) à r(k) utilisées par la station lors du tournoi courant seront les valeurs binaires r(1) à r(k) de la séquence de valeurs binaires r(1) à r(k) associée au sous-intervalle $[A_n^{i-1}, A_n^i[$ identifié. Classiquement, cette identification se fait par tirage aléatoire, la probabilité pour une station de choisir l'intervalle $[A_n^{i-1}, A_n^i[$ étant directement proportionnelle à la longueur de cet intervalle, à savoir à la différence:

$$A_n^i - A_n^{i-1}$$

La manière de déterminer les valeurs r(k) à partir d'une valeur d'index initiale unique A qui vient d'être décrite permet s'affranchir d'un tirage de valeur r(k) à chaque tour de sélection du tournoi, puisque celles-ci peuvent être déduites directement de la valeur d'index A tirée au départ, tout en garantissant que la répartition, entre les stations, des chances d'émettre soit la même que celle qui aurait été obtenue par tirage effectif de valeur basées sur les probabilités $p_n^k$ (r(1), ..., r(k)) affectées aux différents noeuds $N^k$ (r(1), ..., r(k)).

Lorsqu'une méthode d'ordonnancement de type Round Robin est mise en oeuvre par la station 10, la détermination de la valeur d'index A(p+1), représentative du comportement de la station au cours d'un tournoi p+1 (p nombre entier supérieur ou égal à 1), est déterminée par une méthode itérative à partir d'une valeur d'index A(p) utilisée pour un tournoi antérieur p, en appliquant à cette valeur d'index A(p) une permutation circulaire sur l'intervalle [0 ; 1[ de longueur donnée $A_n^i$. Cette méthode itérative fonctionne comme suit.

Lors d'un premier tournoi (p=1), une valeur d'index A(1) est déterminée par la station 10 par tirage d'une valeur binaire avec une probabilité de tirage affectée à la station 10. Puis cette station détermine, comme indiqué ci-dessus, en fonction de la valeur d'index A(1) tirée, la séquence des valeurs binaires r(k) à utiliser au cours de ce premier tournoi pour les différents tours de sélection k, avec $1 \leq k \leq k_{max}$.

Lors du tournoi suivant le premier tournoi (p=2), la station calcule, à partir de la valeur d'index A(1) utilisée lors du premier tournoi, une nouvelle valeur d'index notée A(2) comme suit :

$$A(2) = A(1) + 1 - A_n^i \text{ si } A(1) < A_n^i$$

$$A(2) = A(1) - A_n^i \text{ si } A(1) \geq A_n^i$$

où $[A_n^{i-1}, A_n^i[$ est l'intervalle de valeur dans lequel se trouve la valeur d'index $A_{win}$ utilisée par la station ayant gagné le tournoi courant ; puis cette station détermine, comme indiqué ci-dessus, en fonction de la valeur d'index A(2) ainsi calculée, la séquence des valeurs binaires r(k) à utiliser au cours de ce deuxième tournoi pour les différents tours de sélection k, avec $1 \leq k \leq k_{max}$.

Puis, de manière itérative, lors d'un tournoi suivant ((p+1)ième tournoi), la station détermine, à partir de la valeur d'index A(p) utilisée lors du pième tournoi, une nouvelle valeur d'index notée A(p+1) comme suit :

$$A(p+1) = A(p) + 1 - A_n^i \text{ si } A(p) < A_n^i$$

$$A(p+1) = A(p) - A_n^i \text{ si } A(p) \geq A_n^i$$

où $[A_n^{i-1}, A_n^i[$ est l'intervalle de valeur dans lequel se trouve la valeur d'index $A_{win}$ utilisée par la station ayant gagné le pième tournoi; puis cette station détermine, comme indiqué ci-dessus, en fonction de la valeur d'index A(p+1) ainsi calculée, les valeurs binaires r(k) à utiliser au cours de ce (p+1)ième tournoi pour les différents tours de sélection k, avec $1 \leq k \leq k_{max}$.

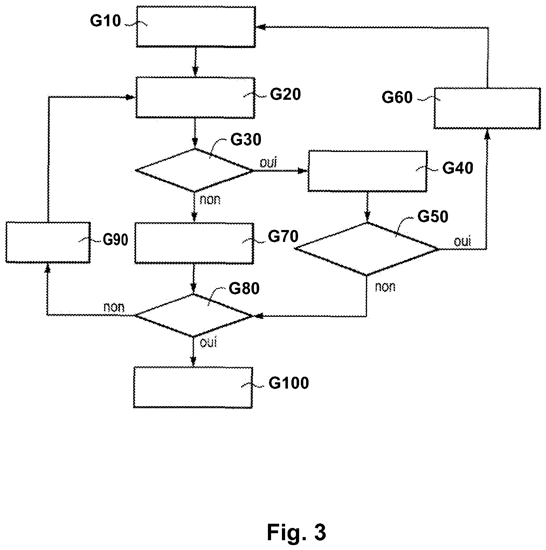

Les principales étapes **G10 à G100** d'un procédé de régulation d'émission selon l'invention sont maintenant décrites en référence à la figure 3. Ce procédé est mis en oeuvre par le module de gestion d'émission d'une station 10 ayant un paquet de données à émettre à travers le réseau 1. Toutes les stations ayant un paquet de données à émettre, mettent en oeuvre simultanément ce même procédé, sans qu'une concertation ou interrogation mutuelle, autre que ce qui est décrit dans les étapes décrites ci-dessous, soit nécessaire entre ces stations.

Le procédé décrit ici est mis en oeuvre par une station 10. Il correspond à ce qu'on appelle un tournoi: il est répété par chaque station tant qu'elle a des paquets à émettre. Les stations ayant des paquets à émettre démarrent toutes au même instant la procédure de résolution de contention par mise en oeuvre d'un tournoi.

Cet instant est choisi de manière à ce que les stations conformes à la norme 802.11 soient empêchées d'émettre, du fait du démarrage du tournoi et des émissions de signaux que ce tournoi implique.

Cet instant est par exemple fonction d'un critère analogue à celui utilisé pour le système de fenêtre de congestion selon le standard IEEE 802.11, c'es-à-dire que le tournoi démarre après une période de temps DIFS1 prédéfinie (qui peut être différente de la période de temps DIFS (DCF Inter Frame Space) définie dans la norme 802.11).

Au cours d'une première étape **G10,** la station 10 initialise une variable k à la valeur 1, cette variable représentant l'indice du tour de sélection courant.

Lors de cette même étape **G10,** chaque station ayant un paquet à émettre détermine, selon la méthode itérative décrite plus haut, une valeur d'index A(p) représentative du comportement de la station au cours du tournoi p courant. Cette valeur d'index A(p) représente la probabilité que la station 10 soit autorisée à émettre un paquet à l'issue du tournoi p. La station détermine ensuite la séquence des valeurs binaires r(k) à utiliser au cours de ce pième tournoi pour les différents tours de sélection k, avec $1 \leq k \leq k_{max}$

A l'étape **G20,** la station lit en mémoire la valeur r(k) associée au tour de sélection courant.

Cette étape G20 est suivie par une étape **G30** au cours de laquelle on vérifie si la valeur binaire r(k) obtenue pour le tour de sélection k est égale à "0".

Si la valeur binaire r(k) obtenue pour le tour de sélection k est égale à "0" (cas d'une interdiction d'émettre), ce test G30 est suivi par une étape **G40** au cours de laquelle la station 10 écoute le réseau de télécommunication sans fil pour déterminer si une autre station 10', 10" a émis un signal indiquant que cette autre station 10', 10" désire émettre un paquet de données.

Si un tel signal est détecté (résultat du test de l'étape **G50** positif), le procédé se termine par l'étape **G60,** sans que la station 10 ait émis son paquet de données. Au cours de cette étape G60, la station 10 attend la fin des tours de sélection et l'émission éventuelle d'un paquet par une autre station 10', 10" avant d'exécuter à nouveau l'étape G10 d'initialisation déjà décrite.

En revanche, si à l'étape G40 aucun signal n'est détecté (résultat du test de l'étape **G50** négatif), ce test est suivi par un test à l'étape **G80** au cours duquel on détermine si le tour k est le dernier tour de sélection, ce qui revient à vérifier si la variable k est égale à la valeur $k_{max}$. Si tel est le cas, la station 100 émet son paquet de données au cours d'une étape G100.

En revanche, si k est strictement inférieur à $k_{max}$, le résultat du test de l'étape G80 est négatif. Cette étape est alors suivie par une étape **G90** au cours de laquelle on incrémente la valeur de la variable k d'une unité, en vue de l'exécution du tour de sélection suivant.

Si au cours du test de l'étape **G30,** il est déterminé que la valeur binaire r(k) obtenue pour le tour de sélection k est égale à la valeur prédéterminée 1 (cas d'une autorisation d'émettre), ce test G30 est suivi par une étape **G70** d'émission d'un signal indiquant que la station 100 désire émettre un paquet de données sur le réseau.

Cette étape G70 d'émission d'un signal est suivie par l'étape **G80** déjà décrite au cours de laquelle on vérifie si le tour de sélection courant k est le dernier tour de sélection. Si tel est le cas, ce test G80 est suivi par l'étape **G100** d'émission du paquet de données par la station 10. En revanche, si tel n'est pas le cas, ce test G80 est suivi par l'étape **G90** d'incrémentation déjà décrite.

L'étape **G90** d'incrémentation est suivie par une nouvelle exécution des étapes G20 à G80 déjà décrites, pour le tour de sélection suivant et selon la logique d'enchaînement des étapes qui vient d'être décrite.

Cas d'une station gagnant le tournoi.

Le paquet, émis à l'issue du tournoi lors de l'étape G100, par une station 10, 10' ou 10" gagnant le tournoi, comprend des données $Q_{win}$ représentatives de la clef gagnante du tournoi : la clef gagnante est ici définie comme la succession d'au plus $k_{max}$ valeurs binaires r(k), affectées à la station gagnante pour les $k_{max}$ tours de sélection.

Ces données $Q_{win}$ sont constituées par:

- soit directement les valeurs binaires r(k) utilisées par la station gagnante pour les $k_{max}$ tours de sélection ; ces valeurs sont notées $r_{win}(k)$ avec $1 \leq k \leq k_{max}$;
- soit la valeur d'index A, notée $A_{win}$ à partir de laquelle la station gagnante a déterminé les valeurs binaires $r_{win}(k)$ utilisées par la station pour les $k_{max}$ tours de sélection,
- soit la valeur $A_n^i$, identifiant l'intervalle $[A_n^{i-1}, A_n^i[$ associé à la classe n de paquet, dans lequel se trouve la valeur d'index $A_{win}$; cette valeur $A_n^i$ particulière est notée $A_{n,win}^i$ : elle est la longueur de la permutation circulaire à appliquer à une valeur d'index affectée à une station.

Ces données $Q_{win}$ permettent toutes de retrouver la valeur $A_{n,win}^i$ permettant à une station de calculer, selon la permutation circulaire définie ci-dessus, la valeur d'index que la station va utiliser lors de l'étape G10 du prochain tournoi pour calculer les valeurs binaires r(k) représentatives des autorisations ou interdictions à utiliser par la station au cours des différents tours de sélection du prochain tournoi.

Deux cas de figures peuvent se produire : soit il y a eu collision entre des émissions de paquets provenant d'au moins deux stations gagnantes distinctes, soit il n'y a pas eu collision.

Premier cas: absence de collision

En l'absence de collision, une station gagnant un tournoi p utilise la valeur $A_{n,win}^i$ de l'intervalle $[A_{n,win}^{i-1}, A_{n,win}^i[$ dans lequel se trouve la valeur d'index $A_{win}$ = A(p) qui lui est affectée pour mettre à jour sa valeur d'index A(p+1) :

A(p+1) = A(p)+1- $A_{n,win}^i$ Au tournoi (p+1) suivant, la station gagnante détermine, à partir de la valeur d'index A(p+1) ainsi calculée, la succession des $k_{max}$ valeurs binaires r(k), représentatives soit une autorisation d'émettre, soit d'une interdiction d'émettre, affectées à cette station gagnante pour les tours de sélection 1 à $k_{max}$ du tournoi (p+1) suivant.

En l'absence de collision, une station ne gagnant pas le tournoi écoute l'émission d'au moins un paquet par la station gagnante et obtient les données $Q_{win}$ représentant la clef gagnante du tournoi, émises par la station gagnante avec ou dans ce paquet.

Puis la station non gagnante détermine la valeur de $A_{n,win}^i$ à utiliser et calcule sa valeur d'index A(p+1) pour le tournoi suivant à partir de la valeur d'index A(p) utilisée pour le tournoi courant:

$$A(p+1) = A(p)+1- A_{n,win}^i \ \text{ si A(p)< } A_{n,win}^i$$

$$A(p+1) = A(p)- A_{n,win}^i \ \text{ si A(p)} \geq A_{n,win}^i$$

Au tournoi (p+1) suivant, la station non gagnante détermine, à partir de la valeur d'index A(p+1) ainsi calculée, la succession des $k_{max}$ valeurs binaires r(k), représentatives soit une autorisation d'émettre, soit d'une interdiction d'émettre, affectées à cette station non gagnante pour les tours de sélection 1 à $k_{max}$ du tournoi (p+1) suivant.

Deuxième cas: collision entre au moins deux émissions de paquet ou émission de paquet perturbée

En raison de la collision, l'écoute par une station des données représentatives de la clef gagnante du tournoi émises est perturbée. En outre, comme deux stations différentes ont émis des données représentatives de la clef gagnante, il y a incertitude sur la clef gagnante à utiliser.

Dans une telle situation, deux variantes de réalisation sont envisageables.

Dans une première variante de réalisation, une station, qu'elle soit gagnante ou non gagnante, utilise en lieu et place des données représentatives de la clef gagnante, des données représentatives d'une clef prédéterminée, c'est-à-dire représentatives d'une succession prédéterminée d'au plus $k_{max}$ valeurs binaires r(k). Dans cette succession prédéterminée, toutes les valeurs binaires r(k) sont de préférence égales à 1, c'est-à-dire que toutes les valeurs binaires sont représentatives d'une autorisation d'émettre.

Dans une deuxième variante de réalisation, une station, qu'elle soit gagnante ou non gagnante, utilise en lieu et place des données représentatives de la clef gagnante, des données déduites des signaux qu'elle a détecté pendant les tours de sélection du tournoi qui vient de se terminer : il s'agit des signaux éventuellement émis à l'étape G70 par une station bénéficiant d'une autorisation d'émettre à un tour de sélection k donné. Lorsqu'une station est à l'écoute de signaux, la station peut entendre un signal à tort (fausse alarme) ou peut ne pas entendre un signal émis (non détection).

La détermination de la clef gagnante se fait de la manière suivante.

Si lors d'un tour de sélection k, aucune station n'a émis de signal à l'étape G70, la valeur r(k) définissant la clef gagnante est nécessairement égale à 0 (interdiction d'émettre). En effet, toutes les stations sont à l'écoute et détectent qu'aucun signal n'a été émis. Donc, sauf problème de fausse détection, chaque station est capable de déterminer que la valeur r(k) est égale à 0 pour ce tour de sélection.

Si lors d'un tour de sélection k, au moins une station a émis un signal à l'étape G70, la valeur r(k) définissant la clef gagnante est égale à 1 (autorisation d'émettre). En effet, une station qui a émis lors de ce tour de sélection k sait qu'un signal a été émis, même si elle ne peut entendre un éventuel signal émis par une autre station. D'autre part, les stations n'ayant pas émis de signal sont à l'écoute et ont entendu l'émission (sauf erreur de réception) d'une autre station. Donc, sauf erreur de réception, chacune des stations participant au tournoi est capable de déterminer que la valeur r(k) est égale à 1 pour ce tour de sélection.

En généralisant les deux variantes de réalisation qui viennent d'être décrites concernant le cas d'une émission de paquet avec collision entre deux stations ou le cas d'une émission de paquet perturbée, une station obtient des données représentatives d'une clef de tournoi $Q_{def}$, c'est-à-dire des données représentatives d'une succession de valeurs binaires r(k), notées $r_{def}(k)$ avec $1 \leq k \leq k_{max}$, représentant des autorisations ou interdictions d'émettre pour une succession de $k_{max}$ tours de sélection.

Dans la première variante ces données sont prédéfinies par configuration et stockées en mémoire préalablement.

Dans la deuxième variante, ces données sont déterminées pendant le tournoi, et ce pour chaque tournoi.

Ces données $Q_{def}$ sont constituées:

- soit directement par cette succession de $k_{max}$ valeurs binaires $r_{def}(k)$;
- soit par une valeur d'index A, notée $A_{def}$ correspondant à cette succession de $k_{max}$ valeurs binaires $r_{def}(k)$,
- soit par une valeur $A_n^i$ particulière, notée $A_{n,def}^i$, identifiant un intervalle $[A_n^{i-1}, A_n^i[$ associé à la classe n de paquet, correspondant à cette succession de $k_{max}$ valeurs binaires $r_{def}(k)$.

Ces données permettent toutes de retrouver la valeur $A_{n,def}^i$.

Dans ces deux variantes de réalisation, une station, qu'elle soit gagnante ou non gagnante, calcule sa valeur d'index A(p+1) pour le tournoi suivant à partir de la valeur d'index A(p) utilisée pour le tournoi courant à partir de cette valeur $A_{n,def}^i$ :

$$A(p+1) = A(p)+1- A_{n,def}^i \text{ si A(p)} < A_{n,def}^i$$

$$A(p+1) = A(p)- A_{n,def}^i \text{ si A(p)} \geq A_{n,def}^i$$

Le procédé de régulation d'émission qui a été décrit est applicable aux réseaux WLAN et plus généralement aux réseaux de type CSMA/CA (Carrier Sense Multiple Access with Collision Avoidance) dans lesquels l'accès au médium de transmission doit être contrôlé pour éviter que deux stations émettrices émettent simultanément, c'est-à-dire éviter les collisions. Le procédé est particulièrement intéressant à utiliser dans les contextes où de nombreuses stations partagent l'accès au médium de transmission.

Le procédé de régulation d'émission est ainsi applicable à des réseaux de télécommunication filaires, par exemple à un réseau utilisant comme médium de transmission un câble électrique et mettant en oeuvre la technique des courants porteurs (CPL, Courants Porteurs en Ligne).

Dans le cas d'une émission par courant porteur, l'accès au médium de transmission est en effet contrôlable de la même manière, les différents signaux du tournoi étant émis via le câble électrique dans la gamme de fréquence dédiée.

### Revendications

1. Procédé de régulation d'émission mis en oeuvre par une station, ayant au moins un paquet à émettre *via* un réseau de communication, participant à au moins un tournoi composé d'une succession de tours de sélection, le procédé étant **caractérisé en ce qu'**il comprend :

   - une étape (G10) d'obtention par ladite station, pour chaque tour de sélection d'un premier tournoi, d'une valeur binaire affectée à ladite station, représentative soit d'une autorisation d'émettre, soit d'une interdiction d'émettre,
   - une étape d'émission (G100), à l'issue du premier tournoi, d'au moins un paquet par ladite station lorsque ladite station détermine (G20, G30), en fonction d'au moins une des valeurs binaires affectées à ladite station pour lesdits tours de sélection du premier tournoi, que ladite station est autorisée à émettre,

   ledit au moins un paquet émis par ladite station comprenant des données représentatives de la succession des valeurs binaires, affectées à ladite station pour lesdits tours de sélection.

2. Procédé selon la revendication 1, dans lequel lesdites données comprennent ladite succession des valeurs binaires affectées à ladite station pour lesdits tours de sélection.

3. Procédé selon la revendication 1, dans lequel lesdites données comprennent une valeur d'index à partir de laquelle ladite succession de valeurs binaires a été déterminé.

4. Procédé selon la revendication 1, dans lequel lesdites données comprennent une valeur représentant la longueur d'une permutation circulaire destinée à être appliquée à une valeur d'index affectée à une station participant audit premier tournoi pour déterminer, pour chaque tour de sélection d'un deuxième tournoi postérieur au premier tournoi, d'une valeur binaire affectée à ladite station, représentative soit une autorisation d'émettre, soit d'une interdiction d'émettre.

**5.** Procédé de régulation d'émission mis en oeuvre par une station, ayant au moins un paquet à émettre *via* un réseau de communication sans fil, participant à au moins un tournoi composé d'une succession de tours de sélection, le procédé comprenant,

   - une étape d'obtention par ladite station, pour chaque tour de sélection d'un premier tournoi, d'une valeur binaire affectée à ladite station, représentative soit une autorisation d'émettre, soit d'une interdiction d'émettre,
   - une étape d'écoute d'une émission d'au moins paquet émis par une autre station qui est autorisée à émettre à l'issue du premier tournoi,

ledit au moins un paquet émis par ladite autre station comprenant des données représentatives de la succession des valeurs binaires, affectées à ladite autre station pour lesdits tours de sélection.

**6.** Procédé selon la revendication 5, comprenant une étape de mise en oeuvre par ladite station d'un deuxième tournoi postérieur au premier tournoi, comprenant une étape de détermination, pour chaque tour de sélection dudit deuxième tournoi, d'une valeur binaire affectée à ladite station, représentative soit une autorisation d'émettre, soit d'une interdiction d'émettre, à partir desdites données représentatives de la succession des valeurs binaires affectées à ladite autre station.

**7.** Procédé selon la revendication 5, comprenant une étape de mise en oeuvre par ladite station d'un deuxième tournoi postérieur au premier tournoi, comprenant une étape de détermination, pour chaque tour de sélection dudit deuxième tournoi, d'une valeur binaire affectée à ladite station, représentative soit une autorisation d'émettre, soit d'une interdiction d'émettre, à partir de données représentatives d'une succession prédéterminée de valeurs binaires représentatives d'une autorisation ou interdiction d'émettre.

**8.** Procédé selon la revendication 6 ou 7, dans lequel une dite valeur binaire affectée à ladite station pour un tour de sélection du premier tournoi est obtenue à partir d'une valeur d'index A(p) représentative du comportement de ladite station pendant le premier tournoi,
dans lequel une dite valeur binaire affectée à ladite station pour un tour de sélection du deuxième tournoi est obtenue à partir d'une valeur d'index A(p+1) représentative du comportement de ladite station pendant le deuxième tournoi, le procédé comprenant une étape de détermination de la valeur d'index A(p+1) à partir de la valeur d'index A(p) et de données représentatives d'une succession de valeurs binaires représentatives d'une autorisation ou interdiction d'émettre.

**9.** Procédé selon la revendication 8, dans lequel ladite valeur d'index A(p+1) est obtenue comme suit:

$$A(p+1) = A(p)+1- A_n^i \ \text{ si } A(p) < A_n^i$$

$$A(p+1) = A(p) - A_n^i \ \text{ si } A(p) \geq A_n^i$$

où $A_n^i$ est une valeur obtenue à partir desdites données représentatives d'une succession de valeurs binaires représentatives d'une autorisation ou interdiction d'émettre.

**10.** Dispositif (100) de régulation d'émission d'une station, ayant au moins un paquet de données à émettre via un réseau de communication, participant à au moins un tournoi composé d'une succession de tours de sélection, le dispositif étant **caractérisé en ce qu'**il comprend :

   - des moyens d'obtention par ladite station, pour chaque tour de sélection d'un premier tournoi, d'une valeur binaire affectée à ladite station, représentative soit d'une autorisation d'émettre, soit d'une interdiction d'émettre,
   - des moyens (140) d'émission, à l'issue du premier tournoi, d'au moins paquet par ladite station lorsque ladite station détermine, en fonction d'au moins une des valeurs binaires affectées à ladite station pour lesdits tours de sélection du premier tournoi, que ladite station est autorisée à émettre,

ledit au moins un paquet émis par ladite station comprenant des données représentatives de la succession des valeurs binaires, affectées à ladite station pour lesdits tours de sélection.

**11.** Programme informatique comprenant des instructions logicielles pour la mise en oeuvre d'un procédé selon l'une des revendications 1 à 9 lorsque ledit programme est exécuté par un processeur de données.

**12.** Support d'enregistrement lisible par un processeur de données sur lequel est enregistré un programme comprenant des instructions de code de programme pour l'exécution d$^2$es étapes d'un procédé selon l'une des revendications 1 à 9.

**Patentansprüche**

**1.** Verfahren zur Regulierung der Übertragung, das durch eine Station ausgeführt wird, die mindestens ein Paket über ein Kommunikationsnetzwerk zu übertragen hat, die an mindestens einem Wettbewerb teilnimmt, der aus einer Aufeinanderfolge von Auswahldurchgängen aufgebaut ist, wobei das Verfahren **dadurch gekennzeichnet ist, dass** es Folgendes umfasst:

- einen Schritt (G10) zum Erhalten durch die Station, für jeden Auswahldurchgang eines ersten Wettbewerbs, eines Binärwertes, welcher der Station zugeordnet wird, der entweder für eine Autorisierung des Übertragens oder für eine Untersagung des Übertragens repräsentativ ist,
- einen Schritt zur Übertragung (G100), am Ende des ersten Wettbewerbs, mindestens eines Pakets durch die Station, wenn die Station in Abhängigkeit von mindestens einem der Binärwerte, welche der Station für die Auswahldurchgänge des ersten Wettbewerbs zugeordnet werden, bestimmt (G20, G30), dass die Station autorisiert ist, zu übertragen, wobei das mindestens eine Paket, das durch die Station übertragen wird, Daten umfasst, die für die Aufeinanderfolge der Binärwerte repräsentativ sind, die der Station für die Auswahldurchgänge zugeordnet werden.

**2.** Verfahren nach Anspruch 1, wobei die Daten die Aufeinanderfolge der Binärwerte umfassen, welche der Station für die Auswahldurchgänge zugeordnet werden.

**3.** Verfahren nach Anspruch 1, wobei die Daten einen Indexwert umfassen, von dem ausgehend die Aufeinanderfolge der Binärwerte bestimmt wurde.

**4.** Verfahren nach Anspruch 1, wobei die Daten einen Wert umfassen, welcher die Länge einer zyklischen Vertauschung repräsentiert, die dazu bestimmt ist, auf einen Indexwert angewendet zu werden, welcher einer Station zugeordnet wird, die an dem ersten Wettbewerb teilnimmt, um, für jeden Auswahldurchgang eines zweiten Wettbewerbs nach dem ersten Wettbewerb, einen Binärwert zu bestimmen, welcher der Station zugeordnet wird, der entweder für eine Autorisierung des Übertragens oder für eine Untersagung des Übertragens repräsentativ ist.

**5.** Verfahren zur Regulierung der Übertragung, das durch eine Station ausgeführt wird, die mindestens ein Paket über ein drahtloses Kommunikationsnetzwerk zu übertragen hat, die an mindestens einem Wettbewerb teilnimmt, der aus einer Aufeinanderfolge von Auswahldurchgängen aufgebaut ist, wobei das Verfahren Folgendes umfasst:

- einen Schritt zum Erhalten durch die Station, für jeden Auswahldurchgang eines ersten Wettbewerbs, eines Binärwertes, welcher der Station zugeordnet wird, der entweder für eine Autorisierung des Übertragens oder für eine Untersagung des Übertragens repräsentativ ist,
- einen Schritt des Abhörens einer Übertragung mindestens eines Pakets, das durch eine andere Station übertragen wird, die am Ende des ersten Wettbewerbs autorisiert ist, zu übertragen,

wobei das mindestens eine Paket, das durch die andere Station übertragen wird, Daten umfasst, die für die Aufeinanderfolge der Binärwerte repräsentativ sind, die der anderen Station für die Auswahldurchgänge zugeordnet werden.

**6.** Verfahren nach Anspruch 5, umfassend einen Schritt der Ausführung durch die Station eines zweiten Wettbewerbs nach dem ersten Wettbewerb, umfassend einen Schritt zum Bestimmen, für jeden Auswahldurchgang des zweiten Wettbewerbs, eines Binärwertes, welcher der Station zugeordnet wird, der entweder für eine Autorisierung des Übertragens oder für eine Untersagung des Übertragens repräsentativ ist, ausgehend von den Daten, die für die Aufeinanderfolge der Binärwerte repräsentativ sind, die der anderen Station zugeordnet werden.

**7.** Verfahren nach Anspruch 5, umfassend einen Schritt zur Ausführung durch die Station eines zweiten Wettbewerbs nach dem ersten Wettbewerb, umfassend einen Schritt zum Bestimmen, für jeden Auswahldurchgang des zweiten Wettbewerbs, eines Binärwertes, welcher der Station zugeordnet wird, der entweder für eine Autorisierung des Übertragens oder für eine Untersagung des Übertragens repräsentativ ist, ausgehend von Daten, die für eine zuvor bestimmte Aufeinanderfolge von Binärwerten repräsentativ sind, die für eine Autorisierung oder eine Untersagung des Übertragens repräsentativ sind.

8. Verfahren nach Anspruch 6 oder 7, wobei ein besagter Binärwert, welcher der Station für einen Auswahldurchgang des ersten Wettbewerbs zugeordnet wird, ausgehend von einem Indexwert A(p) erhalten wird, der für das Verhalten der Station während des ersten Wettbewerbs repräsentativ ist,

wobei ein besagter Binärwert, welcher der Station für einen Auswahldurchgang des zweiten Wettbewerbs zugeordnet wird, ausgehend von einem Indexwert A(p+1) erhalten wird, der für das Verhalten der Station während des zweiten Wettbewerbs repräsentativ ist,

wobei das Verfahren einen Schritt zum Bestimmen des Indexwertes A(p+1) ausgehend von dem Indexwert A(p) und Daten umfasst, die für eine Aufeinanderfolge von Binärwerten repräsentativ sind, die für eine Autorisierung oder Untersagung des Übertragens repräsentativ sind.

9. Verfahren nach Anspruch 8, wobei der Indexwert A(p+1) wie folgt erhalten wird:

$$A(p + 1) = A(p) + 1 - A_n^i \text{ wenn } A(p) < A_n^i$$

$$A(p + 1) = A(p) - A_n^i \text{ wenn } A(p) \geq A_n^i$$

wobei $A_n^i$ ein Wert ist, der ausgehend von den Daten erhalten wird, die für eine Aufeinanderfolge von Binärwerten repräsentativ sind, die für eine Autorisierung oder Untersagung des Übertragens repräsentativ sind.

10. Vorrichtung (100) zur Regulierung der Übertragung einer Station, die mindestens ein Datenpaket über ein Kommunikationsnetzwerk zu übertragen hat, die an mindestens einem Wettbewerb teilnimmt, der aus einer Aufeinanderfolge von Auswahldurchgängen aufgebaut ist, wobei die Vorrichtung **dadurch gekennzeichnet ist, dass** sie Folgendes umfasst:

- Mittel zum Erhalten durch die Station, für jeden Auswahldurchgang eines ersten Wettbewerbs, eines Binärwertes, welcher der Station zugeordnet wird, der entweder für eine Autorisierung des Übertragens oder für eine Untersagung des Übertragens repräsentativ ist,
- Mittel (140) zur Übertragung, am Ende des ersten Wettbewerbs, mindestens eines Pakets durch die Station, wenn die Station in Abhängigkeit von mindestens einem der Binärwerte, welche der Station für die Auswahldurchgänge des ersten Wettbewerbs zugeordnet werden, bestimmt, dass die Station autorisiert ist, zu übertragen,

wobei das mindestens eine Paket, das durch die Station übertragen wird, Daten umfasst, die für die Aufeinanderfolge der Binärwerte repräsentativ sind, die der Station für die Auswahldurchgänge zugeordnet werden.

11. Informatikprogramm, das logische Anweisungen für die Ausführung eines Verfahrens nach einem der Ansprüche 1 bis 9 umfasst, wenn das Programm durch einen Datenprozessor ausgeführt wird.

12. Aufzeichnungsträger, der durch einen Datenprozessor gelesen werden kann, auf dem ein Programm gespeichert ist, das Programmcodeanweisungen zum Durchführen der Schritte eines Verfahrens nach irgendeinem der Ansprüche 1 bis 9 umfasst.

**Claims**

1. Method of regulating sending implemented by a station, having at least one packet to be sent via a communication network, participating in at least one tournament composed of a succession of selection rounds, the method being **characterized in that** it comprises:

- a step (G10) of obtaining by said station, for each selection round of a first tournament, a binary value assigned to said station, representative either of a permission to send, or of a prohibition to send,
- a step (G100) of sending, on completion of the first tournament, at least one packet by said station when said station determines (G20, G30), as a function of at least one of the binary values assigned to said station for said selection rounds of the first tournament, that said station is permitted to send,

said at least one packet sent by said station comprising data representative of the succession of the binary values, assigned to said station for said selection rounds.

2. Method according to Claim 1, in which said data comprise said succession of the binary values assigned to said station for said selection rounds.

3. Method according to Claim 1, in which said data comprise an index value on the basis of which said succession of binary values has been determined.

4. Method according to Claim 1, in which said data comprise a value representing the length of a circular permutation intended to be applied to an index value assigned to a station participating in said first tournament so as to determine, for each selection round of a second tournament posterior to the first tournament, of a binary value assigned to said station, representative either of a permission to send, or of a prohibition to send.

5. Method of regulating sending implemented by a station, having at least one packet to be sent via a wireless communication network, participating in at least one tournament composed of a succession of selection rounds, the method comprising,

- a step of obtaining by said station, for each selection round of a first tournament, a binary value assigned to said station, representative either of a permission to send, or of a prohibition to send,
- a step of listening for a sending of at least one packet sent by another station which is permitted to send on completion of the first tournament,

said at least one packet sent by said other station comprising data representative of the succession of the binary values, assigned to said other station for said selection rounds.

6. Method according to Claim 5, comprising a step of implementation by said station of a second tournament posterior to the first tournament, comprising a step of determining, for each selection round of said second tournament, a binary value assigned to said station, representative either of a permission to send, or of a prohibition to send, on the basis of said data representative of the succession of the binary values assigned to said other station.

7. Method according to Claim 5, comprising a step of implementation by said station of a second tournament posterior to the first tournament, comprising a step of determining, for each selection round of said second tournament, a binary value assigned to said station, representative either of a permission to send, or of a prohibition to send, on the basis of data representative of a predetermined succession of binary values representative of a permission or prohibition to send.

8. Method according to Claim 6 or 7, in which a said binary value assigned to said station for a selection round of the first tournament is obtained on the basis of an index value A(p) representative of the behaviour of said station during the first tournament,
in which a said binary value assigned to said station for a selection round of the second tournament is obtained on the basis of an index value A(p+1) representative of the behaviour of said station during the second tournament, the method comprising a step of determining the index value A(p+1) on the basis of the index value A(p) and of data representative of a succession of binary values representative of a permission or prohibition to send.

9. Method according to Claim 8, in which said index value A(p+1) is obtained as follows:

$$\mathrm{A(p+1) \; = \; A(p)+1-} \; A_n^i \quad \mathrm{if \; A(p)<} \; A_n^i$$

EP 2 901 627 B1

$$A(p+1) = A(p) - A_n^i \quad \text{if } A(p) \geq A_n^i$$

where $A_n^i$ is a value obtained on the basis of said data representative of a succession of binary values representative of a permission or prohibition to send.

10. Device (100) for regulating sending of a station, having at least one data packet to be sent via a communication network, participating in at least one tournament composed of a succession of selection rounds, the device being **characterized in that** it comprises:

- means for obtaining by said station, for each selection round of a first tournament, a binary value assigned to said station, representative either of a permission to send, or of a prohibition to send,
- means (140) for sending, on completion of the first tournament, at least one packet by said station when said station determines, as a function of at least one of the binary values assigned to said station for said selection rounds of the first tournament, that said station is permitted to send,

said at least one packet sent by said station comprising data representative of the succession of the binary values, assigned to said station for said selection rounds.

11. Computer program comprising software instructions for the implementation of a method according to one of Claims 1 to 9 when said program is executed by a data processor.

12. Recording medium readable by a data processor on which is recorded a program comprising program code instructions for the execution of the steps of a method according to one of Claims 1 to 9.

**Fig. 1**

**Fig. 2**

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009095628 A

- US 20100322220 A1

**Littérature non-brevet citée dans la description**

- wireless LAN medium access control (MAC) and physical layer (PHY) spécifications. *IEEE 802.11 a-1999, IEEE 802.11 b-1999, IEEE-802.11 d-2001*

- **Z. ABICHAR ; M. CHANG.** CONTI: Constant Time Contention Resolution for WLAN Access. *IFIP Networking,* 2005